# DEMANDE DE BREVET EUROPEEN

(11) **EP 1 586 410 A1**
(43) Date de publication de la demande: **19.10.2005**
(21) Numéro de dépôt: 05360016.9
(22) Date de dépôt: 13.04.2005
(51) Int. Cl.: B23P 19/08

(54) **Dispositif et procédé de mise en place d'un joint annulaire élastiquement déformable sur un tube**

(30) Priorité: 16.04.2004 FR 0403969
(71) Demandeur: Mecasoft SARL, 68360 Soultz (FR)
(72) Inventeur: Lingelser, Théo, 68500 Bergholtz (FR); Redomier, Jean-Luc, 68200 Mulhouse (FR)
(74) Mandataire: Nithardt, Roland

(57) **Abrégé**

La présente invention concerne un dispositif et un procédé permettant la mise en place automatisée d'un joint élastiquement déformable sur un tube, de manière précise, sécurisée et simple, garantissant le positionnement correct du joint sur ledit tube.

Le dispositif (1) de mise en place d'un joint (3) élastiquement déformable sur un tube (2) comporte quatre pinces de préhension (4) couplées à des moyens de déplacement (5) pour amener le joint (3) en regard du tube (2), l'étirer d'une position "joint non étiré" à une position "joint étiré" permettant son enfilement sans contact sur le tube (2) et le ramener dans une position "joint posé" dans laquelle il est assemblé audit tube (2), tout en empêchant son vrillage par des moyens de guidage (6).

Application : mise en place de joints sur des tubes ou tout autre support.

## Description

La présente invention concerne un dispositif et un procédé de mise en place d'un joint élastiquement déformable sur un tube comportant au moins une unité de mise en place de joint pourvue de moyens de préhension agencés pour positionner le joint, de moyens de déplacement couplés aux moyens de préhension et agencés pour, dans une première étape, éloigner radialement les moyens de préhension de manière à étirer élastiquement le joint d'une position "joint non étiré" à une position "joint étiré" permettant son enfilement sans contact sur le tube puis, dans une seconde étape, rapprocher radialement les moyens de préhension de manière à autoriser le retour du joint dans une position "joint posé" dans laquelle il est assemblé au tube.

De manière connue, la mise en place d'un joint élastiquement déformable, par exemple en caoutchouc naturel ou synthétique, néoprène ou similaire, sur un tube est réalisée par un opérateur qui l'étire manuellement pour l'enfiler autour du tube puis le met en position, en le poussant et/ou en le roulant sur le tube, au moyen de démonte-pneus ou de tout autre outillage à main plus ou moins bien adapté tel que par exemple des tournevis, des leviers, etc. Selon le diamètre du joint et son élasticité, cette mise en place peut nécessiter l'intervention de plusieurs opérateurs. Cette façon de procéder est fastidieuse et très difficilement automatisable. De plus, il est fréquent que le joint soit endommagé par les outils utilisés et que les opérateurs se blessent.

Par ailleurs, si cette mise en place reste néanmoins envisageable pour des joints toriques ayant une section sensiblement cylindrique, elle est complètement inadaptée à des joints ayant une section profilée tels que par exemple des joints plats, triangulaires ou autres, logés ou non dans une gorge de section complémentaire. En effet, ces joints sont généralement utilisés pour assurer l'étanchéité d'un emmanchement. Pour ce faire, leur section est profilée de manière prédéterminée pour présenter des zones d'étanchéité adaptées en contact avec chaque élément à emmancher. Or, lors d'une mise en place manuelle, le fait de pousser et de rouler le joint provoque sa rotation sur lui-même. Le joint se vrille et/ou s'incline si bien que les zones qu'il présente en regard des éléments à emmancher ne correspondent plus aux zones d'étanchéité. L'étanchéité de l'emmanchement est donc aléatoire, ce qui rend cette solution non satisfaisante.

Il existe des machines automatiques, comme celles décrites dans les publications US-5,592,740, JP-58181525 et JP-02075745, mais qui sont limitées à la mise en place des segments sur les pistons d'un moteur à combustion interne. Elles utilisent des doigts d'écartement qui se logent à l'intérieur du segment et sont mobiles radialement pour écarter le segment et autoriser son montage sur le piston. Les segments, habituellement constitués de petites rondelles métalliques plates et fendues, s'écartent aisément sous un faible effort d'étirement et ne sont pas sensibles au vrillage. Ce type de machines ne peut donc pas convenir aux joints en caoutchouc, néoprène ou similaire, de grandes dimensions par exemple jusqu'à 2 mètres de diamètre, et nécessitant un effort d'étirement très élevé par exemple jusqu'à 1 tonne.

La présente invention vise à pallier ces inconvénients en proposant un dispositif et un procédé permettant la mise en place automatisée d'un joint élastiquement déformable sur un tube ou tout autre support, de manière précise, sécurisée et simple, garantissant le positionnement correct du joint sur le tube quelles que soient ses dimensions et sa section.

Dans ce but, l'invention concerne un dispositif de mise en place d'un joint élastiquement déformable sur un tube du genre indiqué en préambule, caractérisé en ce que l'unité de mise en place de joint comporte des moyens de guidage disposés entre lesdits moyens de préhension, ces moyens de guidage étant pourvus au moins d'une surface de guidage destinée à être en contact avec le joint pour l'empêcher de vriller au moins pendant une partie de la seconde étape.

Selon une forme de réalisation préférée, les moyens de préhension, de déplacement et de guidage sont portés par un bâti, ce bâti comportant une ouverture d'axe D destinée à recevoir le tube, les moyens de préhension et de guidage étant disposés radialement autour de cette ouverture.

Les moyens de préhension comportent avantageusement au moins trois pinces disposées radialement et sensiblement à égale distance de l'axe D de l'ouverture et sensiblement équidistantes entre-elles.

Chaque pince comporte de préférence au moins deux mâchoires dont l'une au moins est articulée pour être mobile entre une position "pince fermée" et une position "pince ouverte", ces mâchoires délimitant entre-elles, en position "pince fermée", un logement fermé pour recevoir le joint.

Les moyens de guidage comportent avantageusement au moins trois modules de guidage disposés radialement, sensiblement à égale distance de l'axe D de l'ouverture, sensiblement équidistants entre-eux et alternés par rapport aux pinces.

Selon une forme de réalisation préférée, les modules de guidage comportent au moins deux plaques séparées par un espace destiné à recevoir le joint, chaque plaque définissant une surface de guidage. Ces plaques peuvent être sensiblement parallèles entre-elles.

Les moyens de guidage sont de préférence couplés à des moyens de déplacement complémentaires agencés pour les déplacer radialement de manière à suivre le trajet du joint au moins de sa position "joint étiré" à sa position "joint posé".

De manière avantageuse, les moyens de déplacement et les moyens de déplacement complémentaires comportent au moins un actionneur par pince et/ou par module de guidage, cet actionneur pouvant être choisi dans le groupe comprenant les vérins pneumatiques, les vérins hydrauliques, les vérins électriques, les moteurs électriques.

Le dispositif peut comporter plusieurs unités de mise en place de joint agencées pour être utilisées simultanément ou successivement.

De manière préférentielle, le dispositif comporte une unité de commande agencée pour piloter au moins les moyens de déplacement et/ou les moyens de déplacement complémentaires de manière automatisée selon un cycle de fonctionnement prédéfini.

L'invention concerne également un procédé de mise en place d'un joint élastiquement déformable sur un tube, caractérisé en ce que l'on effectue au moins les étapes suivantes :
- on positionne le joint avec des moyens de préhension,
- dans une première étape on éloigne radialement les moyens de préhension de manière à étirer élastiquement le joint d'une position "joint non étiré" à une position "joint étiré",
- on enfile le joint sans contact sur le tube,
- dans une seconde étape, on rapproche radialement les moyens de préhension de manière à autoriser le retour du joint en position "joint posé" dans laquelle il est assemblé au tube,
- pendant au moins une partie de ladite seconde étape, on guide ledit joint avec des moyens de guidage pourvus au moins d'une surface de guidage destinée à être en contact avec ledit joint pour l'empêcher de vriller,
- on libère ledit joint desdits moyens de préhension.

La présente invention et ses avantages apparaîtront mieux dans la description suivante d'un exemple de réalisation en référence aux dessins annexés donné à titre d'exemple non limitatif, dans lesquels :
- les figures 1 à 6 représentent le dispositif selon l'invention en demi-vue de face à différentes étapes du procédé de pose d'un joint sur un tube, et
- les figures 7 et 8 sont des vues en coupe du dispositif respectivement selon les lignes de coupe AA de la figure 4 et BB de la figure 5.

Par souci de simplification, on appellera dans la suite de la description "dispositif" le dispositif de mise en place d'un joint élastiquement déformable sur un tube selon l'invention.

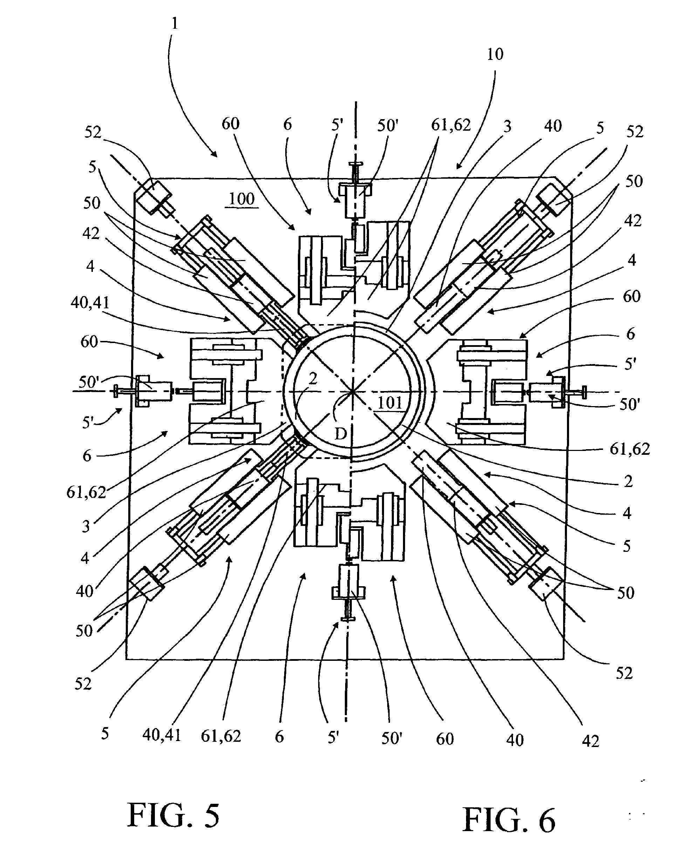

En référence aux figures, le dispositif 1 comporte une unité de mise en place de joint 10 pourvue d'un bâti 100 comportant une ouverture 101 d'axe D, sensiblement circulaire et destinée à recevoir l'extrémité du tube 2 (Cf. figures 5 et 6) sur lequel le joint 3 élastiquement déformable doit être mis en place en position "joint posé". A cet effet, le tube 2 peut comporter une rainure de forme complémentaire pour recevoir le joint 3 en position "joint posé".

Dans cet exemple, le dispositif 1 comporte quatre pinces 4 formant des moyens de préhension, disposées radialement autour de l'ouverture 101 du bâti 100 et permettant d'enfermer le joint 3 et de le présenter en regard du tube 2, le tube 2 étant par exemple maintenu et porté par des supports (non représentés). Ces pinces 4 sont disposées sensiblement à égale distance de l'axe D de l'ouverture 101 et sensiblement équidistantes entre-elles.

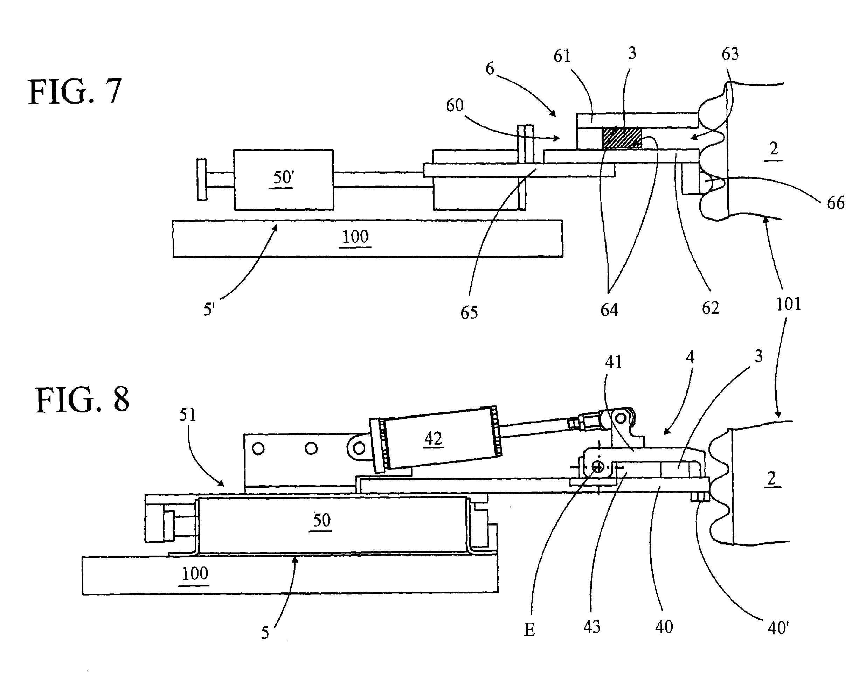

Comme illustré de manière détaillée sur la figure 8, chaque pince 4 comporte deux mâchoires 40, 41 dont une mâchoire fixe 40 et une mâchoire mobile 41. La mâchoire mobile 41 est montée pivotante, par rapport à un axe de pivotement E fixe, pour être mobile entre une position "pince fermée" et une position "pince ouverte". A cet effet, la mâchoire mobile 41 est couplée à un actionneur 42, dans cet exemple un vérin pneumatique, permettant son pivotement entre les positions "pince fermée" et "pince ouverte". La mâchoire mobile 41 comporte un prolongement latéral permettant de délimiter, avec la mâchoire fixe 40, en position "pince fermée", un logement 43 fermé pour recevoir le joint 3. Bien entendu, d'autres formes de pinces peuvent convenir dans lesquelles chaque pince 4 par exemple comporte deux mâchoires mobiles. Dans cet exemple, la mâchoire fixe 40 comporte une butée 40' (Cf. figure 8) destinée à venir en appui sur le tube 2 lors de la rétraction du joint 3 sur le tube 2.

Les pinces 4 sont individuellement couplées à des moyens de déplacement 5 comportant un ou plusieurs actionneurs 50 tels que dans cet exemple deux vérins 50, portés parallèlement par le bâti 100. Ces moyens de déplacement 5 permettent ainsi, lorsque le joint 3 est maintenu dans les pinces 4, dans une première étape, d'éloigner les pinces 4 radialement les unes des autres pour faire passer le joint 3 de sa position "joint non étiré" à sa position "joint étiré" dans laquelle il peut être enfilé sans contact sur le tube 2. La course des moyens de déplacement est limitée par des butées 52 prévues sur le bâti 100. Les moyens de déplacement 5 peuvent également comporter par exemple des glissières 51 (Cf. figure 8) permettant de garantir la trajectoire rectiligne et radiale des pinces 4. Les moyens de déplacement 5 permettent également, dans une seconde étape, de rapprocher radialement les pinces 4 du tube 2 de manière à autoriser le retour du joint 3 en position "joint posé". Le joint 3 en se rétractant se resserre ainsi sur le tube 2 sur lequel il s'assemble par déformation élastique.

Afin de garantir le bon positionnement du joint 3 en position "joint posé" et d'éviter qu'il ne se vrille et/ou ne s'incline, l'unité de mise en place de joint 10 de cet exemple est également pourvue de moyens de guidage 6 destinés à accompagner le joint 3 au moins lors de sa rétraction lorsqu'il passe de sa position "joint étiré" à sa position "joint posé". Ces moyens de guidage 6 peuvent également être utilisés lorsque le joint 3 passe de sa position "joint non étiré" à sa position "joint étiré". Ces moyens de guidage 6 comportent des modules de guidage 60 disposés radialement autour de l'ouverture 101 du bâti 100, chaque module de guidage 60 étant disposé entre une paire de pinces 4 et au même niveau. Ces modules de guidage 60, au nombre de quatre dans cet exemple, sont disposés sensiblement à égale distance de l'axe D de l'ouverture 101 et sensiblement équidistants entre-eux.

Comme illustré de manière détaillée sur la figure 7, chaque module de guidage 60 comporte deux plaques de guidage 61, 62 fixes disposées sensiblement parallèlement l'une par rapport à l'autre. Ces plaques de guidage 61, 62 sont séparées par une ouverture 63 dans laquelle le joint 3 est logé. Les plaques de guidage 61, 62 définissent chacune une surface de guidage 64 destinée à être en contact avec le joint 3. Le joint 3 ainsi pris en sandwich entre les deux surfaces de guidage 64 ne pourra ni pivoter, ni s'incliner, ni se mettre en vrille lors de son étirement et/ou de sa rétraction.

Dans cet exemple, les plaques de guidage 61, 62 sont portées par une plaque support 65 couplée à des moyens de déplacement complémentaires 5'. La plaque support 65 est couplée à l'extrémité d'un actionneur 50', par exemple un vérin fixé au bâti 100. Ainsi, les plaques de guidage 61, 62 peuvent être déplacées en translation radiale pour accompagner l'étirement et/ou la rétraction du joint 3.

Par ailleurs, il est bien entendu que tout type d'actionneur peut être utilisé.

Le dispositif 1 comporte une unité de commande (non représentée) pilotant simultanément et/ou successivement, de manière automatisée selon un cycle de fonctionnement prédéfini, la fermeture et l'ouverture des pinces 4, le déplacement des pinces 4, le déplacement des modules de guidage 60.

Dans une variante de réalisation non représentée, les plaques de guidage 61, 62 sont articulées l'une par rapport à l'autre pour pouvoir être ouvertes et/ou réglées en V. Elles peuvent de plus être prévues réglables de manière à faire varier l'ouverture 63 pour l'adapter à la largeur du joint 3. Elles peuvent enfin comporter des empreintes (non représentées) pour s'adapter à des formes de joints 3 spécifiques, les joints 3 pouvant alors se loger dans les empreintes.

Dans d'autres variantes de réalisation non représentées, le dispositif peut comporter un nombre différent de pinces 4 et de modules de guidage 60, ce nombre étant au moins égal à trois.

Dans l'exemple donné, le bâti 100 est prévu sensiblement vertical, les axes D de l'ouverture 101 et donc du joint 3 et du tube 2 étant sensiblement horizontaux. Le bâti 100 peut également être utilisé sensiblement horizontal ou inclinés, les axes D du tube 2 et du joint étant alors respectivement sensiblement verticaux ou incliné à angle droit par rapport au bâti 100.

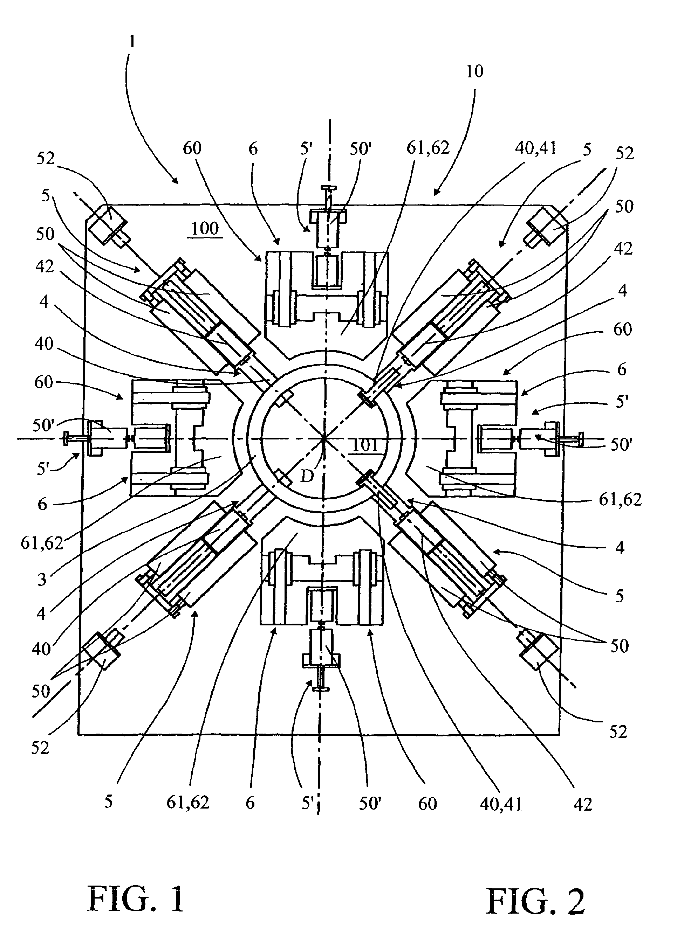

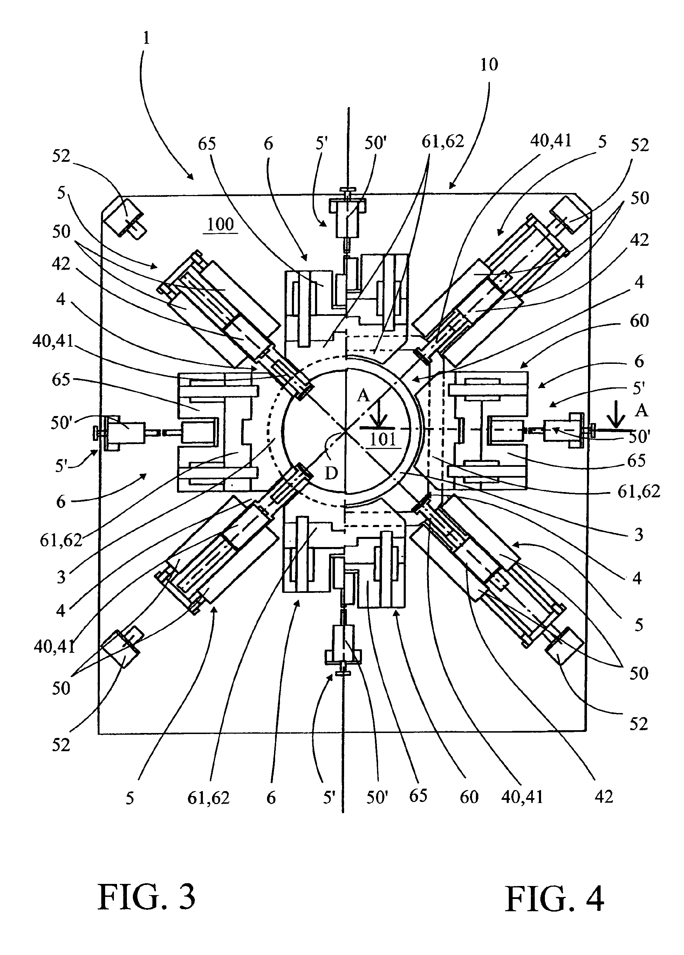

Le procédé de mise en place d'un joint 3 sur un tube 2 selon l'invention mis en oeuvre par le dispositif 1 décrit précédemment suit les étapes suivantes en référence aux figures 1 à 6 :
- on place les pinces 4 en position sortie de manière à ce qu'elles soient rapprochées de D de manière à pouvoir recevoir le joint 3,
- on ouvre les pinces 4 de manière à pouvoir placer le joint 3 (Cf. figure 1),
- on place le joint 3 dans le logement 63, manuellement ou automatiquement au moyen d'un bras manipulateur (non représentés) ou tout autre moyen adapté (Cf. figure 1),
- on ferme les pinces 4 (Cf. figure 2). Le joint 3 est alors tenu par les pinces 4 et ne peut s'échapper,
- on présente le tube 2 en regard du joint 3, dans l'ouverture 101 du bâti 100. Le tube 2 peut également avoir été préalablement positionné dans l'ouverture 101. Le tube 2 peut enfin être positionné dans l'ouverture 101 ultérieurement.
- si le joint 3 risque de se vriller dès le début de son étirement, on actionne de manière optionnelle les moyens de déplacement complémentaires 5' pour rapprocher les modules de guidage 60 de l'axe D de l'ouverture 101 (Cf. figure 3) de manière à guider le joint 3 entre les plaques de guidage 61, 62, en quatre zones intermédiaires aux pinces 4.
- on actionne les moyens de déplacement 5 pour éloigner les pinces 4 de l'axe D de l'ouverture 101 (Cf. figure 4) de manière à ce que le joint 3 passe de sa position "joint non étiré" à sa position "joint étiré" pour l'amener en carré de dimensions intérieures supérieures au diamètre du tube. Pendant cette étape d'étirement, le joint 3 est guidé par les surfaces de guidage 64 des modules de guidage 60 qui l'empêchent de s'incliner, de se vriller. Il est bien entendu que dans le cas où le dispositif ne comporte que trois pinces 4, le joint 3 formera, en position " joint étiré", un triangle. De même, la forme du joint 3 s'adaptera de manière élastique à un nombre supérieur de pinces 4.
- si les plaques de guidage 61, 62 ont préalablement été avancées, on les recule dans une position intermédiaire dans laquelle elles guident le joint 3 tout en autorisant le passage du tube 2 entre-elles,
- on avance le tube 2 dans l'espace intérieur défini par le joint 3, jusqu'à placer la rainure ou l'emplacement du tube 2 prévu, en regard du joint 3,
- on avance les plaques de guidage 61, 62 au plus près du tube 2. A cet effet, les plaques de guidage 61, 62 peuvent comporter un ergot de positionnement 66 destiné à venir en butée sur le tube 2 et/ou à se loger dans une gorge du tube 2,
- on actionne les moyens de déplacement 5 pour rapprocher les pinces 4 de l'axe D de l'ouverture 101 (Cf. figure 5) de manière à ce que le joint 3 passe de sa position "joint étiré" à sa position "joint posé". Pendant cette étape de rétraction, le joint 3 est guidé par les plaques de guidage 61, 62 qui l'empêchent de s'incliner, de se vriller pour qu'il se positionne précisément et de manière correcte sur le tube 2,
- on ouvre les pinces 4 pour libérer le joint 3 en position "joint posé" sur le tube 2,
- on actionne les moyens de déplacement 5 et complémentaires 5' pour éloigner les modules de guidage 60 et les pinces 4 de l'axe D de l'ouverture 101 (Cf. figure 6) de manière à libérer le passage pour le tube 2 avec le joint 3 en place. La mise en place du joint 3 sur le tube 2 est alors terminée.

Le même cycle peut être répété sur une autre zone du tube 2 ou sur son autre extrémité, après retournement et/ou déplacement de l'unité de mise en place de joint 10. Il est par ailleurs possible d'utiliser un dispositif 1 comportant deux unités de mise en place de joint 10 en les faisant fonctionner simultanément pour poser simultanément des joints 3 aux deux extrémités d'un tube 2.

Les tubes 2 ainsi équipés d'un ou de plusieurs joints 3 peuvent ensuite être emmanchés par paire ou par l'intermédiaire d'un manchon d'accouplement au moyen d'une presse ou de tout autre moyen équivalent. Ce dispositif 1 permet la mise en place de joints 3 élastiquement déformables sur des tubes 2 ou tout autre support ayant des dimensions allant de quelques dizaines de mm à plusieurs mètres, ces joints étant réalisés en caoutchouc naturel ou synthétique, néoprène ou similaire, et dont l'effort d'étirement peut aller jusqu'à la tonne.

La description met bien en évidence que le dispositif 1 et le procédé selon l'invention permettent de mettre en place sans intervention humaine, de manière précise et simple, des joints 3 élastiquement déformables sur des tubes 2 tout en évitant que les joints 3 ne s'inclinent ou ne se vrillent quelles que soient les dimensions et sections des joints. Ainsi, le joint 3 pourra jouer efficacement son rôle de barrière étanche une fois le tube 2 assemblé à un autre élément, par exemple un autre tube.

Ce procédé et ce dispositif 1 permettent de plus d'automatiser ces opérations d'où un gain de temps, de main d'oeuvre et surtout la suppression des risques inhérents à la pose manuelle des joints 3.

La présente invention n'est pas limitée à l'exemple de réalisation décrit mais s'étend à toute modification et variante évidentes pour un homme du métier tout en restant dans l'étendue de la protection définie dans les revendications annexées.

## Revendications

1. Dispositif (1) de mise en place d'un joint (3) élastiquement déformable sur un tube (2), comportant au moins une unité de mise en place de joint (10) pourvue de moyens de préhension (4) agencés pour positionner ledit joint (3), de moyens de déplacement (5) couplés aux-dits moyens de préhension (4) et agencés pour, dans une première étape, éloigner radialement lesdits moyens de préhension (4) de manière à étirer élastiquement ledit joint (3) d'une position "joint non étiré" à une position "joint étiré" permettant son enfilement sans contact sur ledit tube (2) puis, dans une seconde étape, rapprocher radialement lesdits moyens de préhension (4) de manière à autoriser le retour dudit joint (3) dans une position "joint posé" dans laquelle il est assemblé audit tube (2), **caractérisé en ce que** ladite unité de mise en place de joint (10) comporte des moyens de guidage (6) disposés entre lesdits moyens de préhension (4), ces moyens de guidage (6) étant pourvus au moins d'une surface de guidage (64) destinée à être en contact avec ledit joint (3) pour l'empêcher de vriller au moins pendant une partie de ladite seconde étape.

2. Dispositif (1) selon la revendication 1, **caractérisé en ce que** lesdits moyens de préhension (4), de déplacement (5) et de guidage (6) sont portés par un bâti (100), et ce bâti (100) comportant une ouverture (101) d'axe D destinée à recevoir ledit tube (2) et **en ce que** lesdits moyens de préhension (4) et de guidage (6) sont disposés radialement autour de ladite ouverture (101).

3. Dispositif (1) selon la revendication 1, **caractérisé en ce que** lesdits moyens de préhension comportent au moins trois pinces (4) disposées radialement, sensiblement à égale distance de l'axe D de ladite ouverture (101) et sensiblement équidistantes entre-elles.

4. Dispositif (1) selon la revendication 3, **caractérisé en ce que** chaque pince (4) comporte au moins deux mâchoires (40, 41) dont au moins l'une est articulée pour être mobile entre une position "pince fermée" et une position "pince ouverte", ces mâchoires (40, 41) délimitant entre-elles, en position "pince fermée", un logement (63) fermé pour recevoir ledit joint (3).

5. Dispositif (1) selon la revendication 3, **caractérisé en ce que** lesdits moyens de guidage (6) comportent au moins trois modules de guidage (60) disposés radialement, sensiblement à égale distance de l'axe D de ladite ouverture (101), sensiblement équidistants entre-eux et en alternés par rapport aux-dites pinces (4).

6. Dispositif (1) selon la revendication 5, **caractérisé en ce que** lesdits modules de guidage (60) comportent au moins deux plaques (61, 62) séparées par un espace (63) destiné à recevoir ledit joint (3), chaque plaque (61, 62) définissant une surface de guidage (64).

7. Dispositif (1) selon la revendication 6, **caractérisé en ce que** lesdites plaques (61, 62) sont disposées sensiblement parallèlement entre-elles.

8. Dispositif (1) selon la revendication 5, **caractérisé en ce que** lesdits modules de guidage (60) sont couplés à des moyens de déplacement complémentaires (5') agencés pour les déplacer radialement de manière à suivre le trajet dudit joint (3) au moins entre sa position "joint étiré" et sa position "joint posé".

9. Dispositif (1) selon l'une au moins des revendications 1 et 8, **caractérisé en ce que** lesdits moyens de déplacement (5) et lesdits moyens de déplacement complémentaires (5') comportent au moins un actionneur (50, 50') par pince (4) et/ou par module de guidage (60).

10. Dispositif (1) selon la revendication 9, **caractérisé en ce que** lesdits actionneurs (50, 50') sont choisis dans le groupe comprenant les vérins pneumatiques, les vérins hydrauliques, les vérins électriques, les moteurs électriques.

11. Dispositif (1) selon la revendication 1, **caractérisé en ce qu'**il comporte plusieurs unités de mise en place de joint (10) agencées pour être utilisées simultanément ou successivement.

12. Dispositif (1) selon la revendication 1, **caractérisé en ce qu'**il comporte une unité de commande agencée pour piloter au moins lesdits moyens de déplacement (5), lesdits moyens de déplacement complémentaires (5') de manière automatisée selon un cycle de fonctionnement prédéfini.

13. Procédé de mise en place d'un joint (3) élastiquement déformable sur un tube (2), **caractérisé en ce que** l'on effectue au moins les étapes suivantes :
- on positionne ledit joint (3) avec des moyens de préhension (4),
- dans une première étape on éloigne radialement lesdits moyens de préhension (4) de manière à étirer élastiquement ledit joint (3) de sa position "joint non étiré" à une position "joint étiré",
- on enfile le joint (3) sans contact sur ledit tube (2),
- dans une seconde étape, on rapproche radialement lesdits moyens de préhension (4) de manière à autoriser le retour dudit joint (3) dans une position "joint posé" dans laquelle il est assemblé audit tube (2),
- pendant au moins une partie de ladite seconde étape, on guide ledit joint (3) avec des moyens de guidage (6) pourvus au moins d'une surface de guidage (64) destinée à être en contact avec ledit joint (3) pour l'empêcher de vriller,
- on libère ledit joint (3) desdits moyens de préhension (4).
